# EUROPÄISCHE PATENTSCHRIFT

(11) **EP 1 394 916 B1**
(45) Veröffentlichungstag und Bekanntmachung des Hinweises auf die Patenterteilung: **06.02.2008**
(21) Anmeldenummer: 03016110.3
(22) Anmeldetag: 16.07.2003
(51) Int. Cl.: H02G 3/10, H02G 3/12

(54) **Geräteträger für Sockelleisten-Kanäle**
Apparatus holder for use with electrical trunkings
Porte appareillage pour canalisations électriques

(30) Priorität: 24.08.2002 DE 20213032 U
(43) Veröffentlichungstag der Anmeldung: 03.03.2004
(73) Patentinhaber: Tehalit GmbH, 67716 Heltersberg (DE)
(72) Erfinder: Schnurr, Richard, 66957 Vinningen (DE); Arnold, Hans-Joachim, 67706 Krickenbach (DE)
(74) Vertreter: Patentanwälte Möll und Bitterich

(56) Entgegenhaltungen:
- EP-A- 0 837 535
- DE-A- 1 690 086
- DE-A- 3 937 371
- DE-U- 29 807 106

## Beschreibung

Die Erfindung betrifft Geräteträger zum Befestigen von Elektroinstallationsgeräten mit bodenseitigen, radial überstehenden Haltelaschen in Sockelleistenkanälen gemäß dem Oberbegriff des Anspruchs 1.

Um Elektroinstallationsgeräte, z. B. Steckdosen, an einem Sockelleistenkanal anzubringen, werden spezielle Geräteträger verwendet. Man vergleiche EP 0 159 554 A, EP 0 239 456 A, FR 27 70 047 A oder EP 0 702 442 B. In allen Fällen besitzt der Geräteträger eine Bodenplatte, die neben dem Sockelleistenkanal an der Wand befestigt wird, wozu in der Bodenplatte Öffnungen vorgesehen sind. Auf der Bodenplatte sind Vorrichtungen vorgesehen, an denen das Elektroinstallationsgerät, welches mit korrespondierenden Einrichtungen versehen ist, befestigt wird. Schließlich besitzt der Geräteträger noch eine Abdeckhaube, die Bodenplatte und Elektroinstallationsgerät abdeckt.

Eine handelsübliche Art von Elektroinstallationsgeräten besitzt ein etwa quaderförmiges Gehäuse mit rechteckigem oder quadratischem Grundriss, an dem bodenseitig sowie radial abstehende Haltelaschen angeformt sind. Zur Befestigung eines solchen Installationsgerätes besitzen die in der FR 27 70 047 A sowie in der EP 0 187 486 A beschriebenen Geräteträger vier auf der Bodenplatte befestigte Rasthaken. Um das Einschnappen der Haltelaschen zu ermöglichen, sind die Rasthaken federnd. Wird nun aus einer aufgerasteten Steckdose ein fest sitzender Stecker herausgezogen, so wirken erhebliche Kräfte auf die Rasthaken und ihre Halterungen. Da diese flexibel sind, können die Rasthaken zur Seite ausweichen, worauf sich Installationsgerät und Abdeckhaube vom Geräteträger lösen. Damit sind die spannungsführenden Leitungen und Kontakte direkt zugänglich, die elektrische Sicherheit ist nicht mehr gegeben. Das ist unzulässig.

Um zu verhindern, dass sich das Elektroinstallationsgerät wie beschrieben in unerwünschter Weise vom Geräteträger lösen kann, wird in der FR 27 70 047 A vorgeschlagen, die Haube mit dem Basisteil zu verschrauben. Dazu ist die Haube mit Schrauböffnungen, das Basisteil mit korrespondierenden Gewindepfosten ausgerüstet. Eine solche Schraubbefestigung ist zwar stabil, jedoch zeit- und damit kostenaufwändig. Außerdem wird das Anbringen der Sicherungsschrauben in der Praxis oft vergessen. Diese Lösung ist daher unbefriedigend.

Bei den in der EP 0 159 554 A oder EP 0 239 456 A beschriebenen Geräteträgern werden die Elektroinstallationsgeräte an Haltepfosten auf der Grundplatte festgeschraubt. Eine solche Schraubverbindung kann sich auch bei hohen Zugkräften nicht lösen. Allerdings ist eine Schraubmontage zeitaufwändig und daher ebenfalls unbefriedigend.

In der DE 1 690 086 wird ein elektrisches Installationsgerät in wasserdichter Bauart mit einem topfförmigen Gehäuse beschrieben, dessen Geräteeinsatz an Vorsprüngen des Gehäuses geführt ist und der Geräteeinsatz durch hakenförmige elastische Zungen des Gehäuses gesichert ist, die beim Einsetzen des Geräteeinsatzes selbsttätig sich an diesem verrasten. Die hakenförmigen Zungen sind hierbei an einem Biegearm angeformt. Der Geräteeinsatz hat eine schräge Anlauffläche mit der die elastische Zunge zusammenwirkt. Bevor die elastische Zunge durch die Anlauffläche zur Seite gedrückt wird, hat der Geräteeinsatz durch die Vorsprünge seine Führung erhalten. Durch weiteres Abwärtsdrücken des Geräteeinsatzes verrastet die elastische Zunge hinter dem Einsatz.

Der vorliegenden Erfindung liegt daher die Aufgabe zugrunde, einen Geräteträger für Sockelleistenkanäle anzugeben, an dem die beschriebenen Elektroinstallationsgeräte in einfachster Weise ohne Werkzeug so befestigt werden können, dass sich das Elektroinstallationsgerät auch bei hohen Abzugskräften nicht unbeabsichtigt von der Grundplatte löst.

Diese Aufgabe wird gelöst durch einen Geräteträger mit den Merkmalen des Anspruchs 1.

Auch die vorliegende Erfindung verwendet federnd gelagerte Rasthaken, auf die die Haltelaschen der Elektroinstallationsgeräte in einfachster Weise aufgerastet werden können. Dank der erfindungsgemäßen Lagerung der Rasthaken an radialen Biegearmen und dank der gewählten Abstimmung der Biegesteifigkeiten von Rasthaken und Biegearm wird erreicht, dass die Rasthaken beim Versuch, das Elektroinstallationsgerät abzuziehen, die Haltelaschen um so fester halten, je höher die Abzugskraft ist. Das gewollte Abnehmen des Elektroinstallationsgeräts ist dagegen dank der federnden Biegearme problemlos möglich.

Vorteilhafterweise sind die Rasthaken mittels Rippen versteift. Auf diese Weise lässt sich auch bei relativ geringem Materialeinsatz die erforderliche Biegesteifigkeit erzielen.

Gemäß einer Ausgestaltung der Erfindung besteht der Biegearm aus zwei parallelen Leisten. Diese Maßnahme eröffnet eine weitere Möglichkeit, die Biegeeigenschaften zu beeinflussen. Außerdem ergeben sich dadurch zusätzliche Möglichkeiten zur Gestaltung des Spritzgusswerkzeugs, wenn der Geräteträger wie üblich aus Kunststoff, insbesondere thermoplastischem Kunststoff hergestellt ist.

Zur zusätzlichen Fixierung der Haltelaschen im montierten Zustand können am Biegearm seitlich Halteleisten angebracht sein.

Die Biegeeigenschaften des Biegearms lassen sich auch über dessen Länge beeinflussen. Gemäß einer Ausgestaltung der Erfindung ist der Biegearm wenigstens dreimal länger als die Projektion des Rasthakens auf den Biegearm.

Anhand der Zeichnung soll die Erfindung in Form eines Ausführungsbeispiels näher erläutert werden. Es zeigen
- Fig. 1: einen Geräteträger für Sockelleistenkanäle als Schrägansicht und
- Fig. 2: einen Schnitt entlang der Linie II-II durch den Geräteträger der Fig. 1.

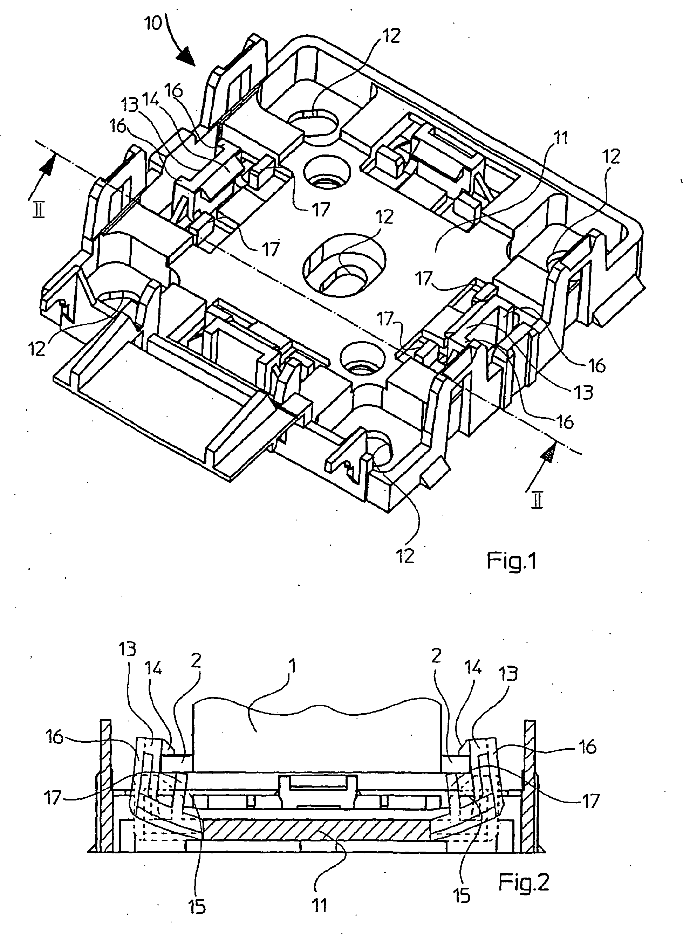

Fig. 1 als Schrägansicht und Fig. 2 als Schnitt zeigen einen Geräteträger 10 zur Befestigung eines Elektroinstallationsgerätes 1, welches bodenseitig radial abstehende Haltelaschen 2 aufweist. Der Geräteträger 10 besitzt eine Bodenplatte 11 mit Öffnungen 12 zur Befestigung des Geräteträgers 10 an einer Unterlage, z. B. einer Wand. Des weiteren erkennt man auf der Bodenplatte 11 radial gegenüberliegend zwei Rasthaken 13, die auf ihrer Oberseite eine Einführschräge 14 aufweisen. Die Rasthaken 13 sind mit Hilfe von rückseitigen Rippen 16 zusätzlich versteift.

Wie insbesondere der Schnitt in Fig. 2 erkennen lässt, ist jeder Rasthaken 13 am Ende eines Biegearms 15, der Biegearm 15 selbst an der Bodenplatte 11 angeformt. Der Biegearm 15 ist biegeweicher als die Bodenplatte 11 und der Rasthaken 13. Außerdem ist bei dem dargestellten Ausführungsbeispiel der Biegearm 15 dreimal länger als die Projektion des Rasthakens 13 auf den Biegearm 15.

An den Biegearmen 15 sind links und rechts neben den Haltelaschen 2 Halteleisten 17 angeformt, die das Elektroinstallationsgerät 1 zusätzlich zentrieren.

Die radiale Ausrichtung der Biegearme 15 und die Abstimmung der Biegesteifigkeiten führt dazu, dass beim Ziehen am Elektroinstallationsgerät 1, wie es beispielsweise beim Abziehen eines Steckers aus einer Steckdose auftritt, die Biegearme 15 sich nach oben biegen, wodurch die Rasthaken 13 um so fester an die Haltelaschen 2 gepresst werden, je größer die Zugkraft ist. Auf diese Weise ist sichergestellt, dass - jedenfalls innerhalb der Grenzen der Materialfestigkeit - sich das Elektrogerät 1 nicht ungewollt vom Geräteträger 10 lösen kann. Die gewollte Demontage des Elektrogerätes 1 ist jedoch problemlos möglich, ebenso die Montage.

## Patentansprüche

1. Geräteträger (10) zur Befestigung von Elektrogeräten (1) mit bodenseitigen, radial überstehenden Haltelaschen (2) in Sockelleistenkanälen, im wesentlichen umfassend
- eine Bodenplatte (11),
- Befestigungsöffnungen (12) in der Bodenplatte (11),
- Rasthaken (13) für die Schnappbefestigung des Elektroinstallationsgerätes (1) auf der Bodenplatte (11)
- und eine Einführschräge (14) an den Rasthaken (13),
- jeder Rasthaken (13) ist an einem Biegearm (15) angeformt,
**gekennzeichnet durch** die Merkmale:
- der Biegearm (15) ist
- an der Bodenplatte (11) angeformt,
- radial ausgerichtet
- und biegeweicher als der Rasthaken (13) und die Bodenplatte (11).

2. Geräteträger nach Anspruch 1, **gekennzeichnet durch** das Merkmal:
- der Rasthaken (13) ist mittels Rippen (16) versteift.

3. Geräteträger nach Anspruch 1 oder 2, **gekennzeichnet durch** das Merkmal:
- der Biegearm (15) besteht aus zwei parallelen Leisten.

4. Geräteträger nach einem der Ansprüche 1 bis 3, **gekennzeichnet durch** das Merkmal:
- Halteleisten (17) am Biegearm (15) fixieren die Haltelaschen (2) seitlich.

5. Geräteträger nach einem der Ansprüche 1 bis 4, **gekennzeichnet durch** das Merkmal:
- der Biegearm (15) ist wenigstens dreimal länger als die Projektion des Rasthakens (13) auf den Biegearm 15.

6. Geräteträger nach einem der Ansprüche 1 bis 5, **gekennzeichnet durch** das Merkmal:
- er besteht aus thermoplastischem Kunststoff.

## Claims

1. Apparatus holder (10) for fastening electrical apparatus (2) with bottom, radially projecting retaining clips (2) in skirting trunking, essentially comprising
- a base plate (11)
fastening openings (12) in the base plate (11),
- locking hooks (13) for the snap fastening of the electrical installation apparatus (1) to the base plate (11)
- and an insertion slope (14) at the locking hooks (13),
- each locking hook (13) is formed on a bending arm (15),
**characterised by** the features:
- the bending arm (15) is
- formed on the base plate (11),
- radially oriented
- and more flexible than the locking hook (13) and the base plate (11).

2. Apparatus holder according to Claim 1, **characterised by** the feature:
- the locking hook (13) is reinforced by means of ribs (16).

3. Apparatus holder according to Claim 1 or 2, **characterised by** the feature:
- the bending arm (15) consists of two parallel strips.

4. Apparatus holder according to any one of Claims 1 to 3, **characterised by** the feature:
- retaining strips (17) at the bending arm (15) fix the retaining clips (2) at the sides.

5. Apparatus holder according to any one of Claims 1 to 4, **characterised by** the feature:
- the bending arm (15) is at least three times longer than the projection of the locking hook (13) onto the bending arm (15).

6. Apparatus holder according to any one of Claims 1 to 5, **characterised by** the feature:
- it consists of thermoplastic plastics material.

## Revendications

1. Support d'appareillage (10) destiné à la fixation d'appareils électriques (1) équipés de pattes de maintien (2) en saillie radiale côté fond dans des conduits de plinthes, comprenant essentiellement
- une plaque de fond (11),
- des ouvertures de fixation (12) dans la plaque de fond (11),
- des crochets d'encliquetage (13) pour la fixation à déclic ou à enclenchement d'appareils d'installation électrique (1) sur la plaque de fond (11)
- et un chanfrein d'introduction (14) sur les crochets d'encliquetage (13),
- chaque crochet d'encliquetage (13) est formé sur un bras flexible (15),
**caractérisé en ce que** :
- le bras flexible (15) est
- formé sur la plaque de fond (11),
- aligné radialement
- et plus souple en flexion que le crochet d'encliquetage (13) et la plaque de fond (11).

2. Support d'appareillage selon la revendication 1, **caractérisé en ce que** :
- le crochet d'encliquetage (13) est rigidifié au moyen de nervures (16).

3. Support d'appareillage selon la revendication 1 ou 2, **caractérisé en ce que** :
- le bras flexible (15) se compose de deux barrettes parallèles.

4. Support d'appareillage selon l'une des revendications 1 à 3, **caractérisé en ce que** :
- des barrettes de maintien (17) sur le bras flexible (15) fixent latéralement les pattes de maintien (2).

5. Support d'appareillage selon l'une des revendications 1 à 4, **caractérisé en ce que** :
- le bras flexible (15) est au moins trois fois plus long que la projection du crochet d'encliquetage (13) sur le bras flexible (15).

6. Support d'appareillage selon l'une des revendications 1 à 5, **caractérisé en ce que** :
- il est réalisé dans une matière plastique thermoplastique.
